# EUROPEAN PATENT SPECIFICATION

(11) **EP 4 499 388 B1**
(45) Date of publication and mention of the grant of the patent: **26.11.2025**
(21) Application number: 23714721.0
(22) Date of filing: 26.03.2023
(51) Int. Cl.: B29C 64/118, B29C 64/321, B33Y 10/00, B33Y 30/00, B33Y 70/00

(54) **A METHOD FOR PRINTING A 3D OBJECT USING PELLETS**
VERFAHREN ZUM DRUCKEN EINES 3D-OBJEKTS MITTELS PELLETS
PROCÉDÉ D'IMPRESSION D'UN OBJET 3D À L'AIDE DE GRANULÉS

(30) Priority: 31.03.2022 EP 22165723
(43) Date of publication of application: 05.02.2025
(73) Proprietor: Signify Holding B.V., 5656 AE Eindhoven (NL)
(72) Inventor: VAN BOMMEL, Ties, 5656 AE Eindhoven (NL); HIKMET, Rifat, Ata, Mustafa, 5656 AE Eindhoven (NL)
(74) Representative: Verweij, Petronella Daniëlle
(86) International application number: PCT/EP2023/057750
(87) International publication number: WO 2023/186755

(56) References cited:
- EP-A1- 3 117 982
- CN-A- 107 116 788
- KR-A- 20190 112 917

## Description

### FIELD OF THE INVENTION

The present invention relates to a method for manufacturing a 3D item. Further, the invention relates to a 3D printer for use in such a method.

### BACKGROUND OF THE INVENTION

Within the next 10-20 years, digital fabrication will increasingly transform the nature of global manufacturing. One of the aspects of digital fabrication is 3D printing. Currently, many different techniques have been developed in order to produce various 3D printed objects using various materials such as ceramics, metals, and polymers.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, for example for thermoplastics, the filament is melted and extruded before being laid down. In general, FDM printers use a thermoplastic filament, which is heated to its melting point and then extruded, layer by layer, or in fact filament after filament to create a three-dimensional object. FDM printers are relatively fast, low cost and can be used for printing complicated 3D objects. Such printers are used in printing various shapes using various polymers. The technique is also being further developed in the production of LED luminaires and lighting solutions.

Recently, the use of extruders in 3D printers for printing directly onto a surface (for example, a build plate) using granulated material 3D printable material has been gaining importance. Using granulated 3D printable material in 3D printers offer the advantage of cost efficiency, since such a material is much cheaper compared to filaments. Furthermore, it also offers the advantage of being able to use materials that are difficult or even impossible to use in the form of a filament, for example because they are too brittle.

In the remainder of this text, granulated 3D printable material is also referred to as "pellets". However, because of the nature of the extrusion process using pelleted 3D printable material, starting and stopping printing and reaching steady state extrusion takes time.

Therefore, there is a need to provide an improved method for manufacturing a 3D printed item using pelleted 3D printable material.

CN-107116788 discloses a3D printer having an extrusion device that can be supplied with particulate printing material. The 3D printer further has a percussion mechanism for shaking the particulate printing material.

### SUMMARY OF THE INVENTION

Considering the above, the present invention provides such a method for producing a 3D item by means of fused deposition modelling using a 3D printer. The method comprises the steps of:
a) providing a plurality of elongated pellets, each elongated pellet of the plurality of elongated pellets comprising a first 3D printable material comprising a first thermoplastic polymer, wherein each elongated pellet of the plurality of elongated pellets has a length L_P along a longitudinal axis and a width W_P in a direction being substantially perpendicular to the longitudinal axis,
b) feeding the plurality of elongated pellets into a feeding container,
c) aligning the plurality of elongated pellets in an aligning element, such that the longitudinal axes of elongated pellets of the plurality of elongated pellets are substantially parallel to each other, thus forming an aligned plurality of elongated pellets,
d) feeding the aligned plurality of elongated pellets through a feeding duct into a printer head of the 3D printer, and
e) layer-wise depositing the first 3D printable material (1) thus obtaining the 3D item (6) comprising at least one layer of first 3D printed material (1).

A 3D printer for use with pellets as 3D printable material typically has an extruder comprising a screw and a nozzle. By using elongated pellets, and by aligning these elongated pellets in in aligning element, the pellets can be transported without having to use an extruder screw. Instead, one may now simply use a set-up with counter rotating wheels.

By being able to transport pellets without having to use an extruder screw, the aforementioned disadvantage of an extrusion process using pelleted 3D printable material, being that it takes a relatively long time to start and stop printing and to reach a steady state extrusion, is now overcome. When using an extruder screw to transport pellets, pressure is built-up in the interior of the extruder screw, and it typically takes a relatively long time before this pressure is released. This is the reason why it takes a relatively long time to start and stop printing and to reach a steady state extrusion in a typical extrusion process using pelleted 3D printable material. When instead of an extruder screw, an alternative transport mechanism is used, such as a mechanism employing counter-rotating wheels, there are no such pressure release times, so that starting and stopping printing and reaching a steady state extrusion is much faster.

The term "elongated" is in the context of the present invention intended to mean that the length L_P of the pellet is substantially larger than the width W_P of the pellet. In particular, the aspect ratio (AR), defined as L_P/W_P, of each elongated pellet of the plurality of elongated pellets may have a value of from 2 to 10. The higher AR provides a more efficient aligning and transport of the pellets.

Preferably, all the elongated pellets have the same aspect ratio. Alternatively, the AR of the elongated pellets may be slightly different.

The term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. The 3D printed material may be printed as a filament and deposited as such. The 3D printable material may be provided as filament or may be formed into a filament. Hence, whatever starting materials are applied, a filament comprising 3D printable material is provided by the printer head and 3D printed. The term "extrudate" may be used to define the 3D printable material downstream of the printer head, but not yet deposited. The latter is indicated as "3D printed material". In fact, the extrudate comprises 3D printable material, as the material is not yet deposited. Upon deposition of the 3D printable material or extrudate, the material is thus indicated as 3D printed material. Normally, the 3D printable material, the extrudate and 3D printed material are the same material, as the material upstream of the printer head, downstream of the printer head, and when deposited, is substantially the same material.

Herein, the term "3D printable material" may also be indicated as "printable material". The term "polymeric material" may refer to a blend of different polymers but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

The aligning element may be a duct or the like and may be an integral portion of the feeding container. The feeding container may have any suitable shape and size. In particular, the feeding container may be a feeding funnel having a first end portion arranged for receiving the elongated pellets, and a second end portion arranged for releasing elongated pellets, wherein the cross-section of the first end portion is greater than the cross-section of the second end portion. The second end portion of the feeding funnel may be connected to the aligning element. Once the elongated pellets reach the second end portion of the feeding funnel, they are fed to the aligning element, wherein they are aligned.

Step c) may be performed by providing a mechanical force to the feeding container. Such a mechanical force may be vibration or the like.

Step d) may be performed by means of a pushing element and/or a transporting element. The pushing element may be a plunger, the transporting element may be a wheel conveyor.

Each elongated pellet of the plurality of elongated pellets may comprise at least a first portion and at least a second portion along the length of the elongated pellet. The first portion may have a property being different from the property of the second portion. The property may be selected from a group consisting of an optical property, a physical property, a mechanical property, and combinations thereof. The optical property may be colour, reflectivity, absorption and/or light transmission. The physical property may be thermal conductivity. The mechanical property may be the thermoplastic polymer.

Each elongated pellet of the plurality of elongated pellets may comprise a plurality of first portions and/or a plurality of second portions. The plurality of first portions and/or the plurality of second portions may be arranged symmetrically along the length of the elongated pellet. In particular, the elongated pellets may have different colors along the length of the pellet, preferably arranged in a symmetrical design. Because of the elongated shape of the pellet, the orientation of the pellet intake can be controlled, thus providing alternating patterns in the 3D item. By using pellets having a symmetrical pattern, a perfect alternating design in the 3D item is obtained. As mentioned above, the pellets may have sections which differ in reflectivity, absorption and/or light transmission. For example, the elongated pellets may have a transparent section at one end, a transparent section at the other end, and a reflective section arranged between the first end and the second end. Suggested pellets can be made, for example, with two-component extrusion.

Each elongated pellet of the plurality of elongated pellets may comprise a 3D printable core material and a 3D printable shell material, wherein the first 3D printed material comprises a core comprising a 3D printed core material and a shell comprising 3D printed shell material, wherein the shell at least partly encloses the core, and wherein the 3D printable core and/or the 3D printable shell material comprises electrically and/or thermally conductive material. Because of the elongated shape of the pellet, the orientation of the pellet intake can be controlled thus aligning orientation of the electrically and/or thermally conductive core in the 3D item. A shell of the elongated pellets may comprise electrically and/or thermally conductive particles in order to improve the electrical and/or thermal conductivity of the 3D item.

The method of the present invention may further comprise the steps of:
f) feeding a second 3D printable material into the printer head of the 3D printer, and
g) layer-wise depositing the second 3D printable material thus obtaining the 3D item comprising at least one layer comprising the second 3D printed material.

The second 3D printable material may comprise a second thermoplastic polymer being different from the first thermoplastic polymer. Preferably, the second 3D printable material is in the form of a filament. Step f) may occur immediately before or immediately after step d). In other words, feeding a second 3D printable material into the printer head of the 3D printer may occur immediately before feeding the aligned plurality of elongated pellets through a feeding duct into a printer head of the 3D printer. Alternatively, step f) may occur immediately before step d). It is further conceivable that step f) occurs both immediately before and immediately after step d), i.e., that the first and the second 3D printable materials are fed alternatingly to the nozzle of the 3D printer.

The first and/or the second 3D printable material may include additives, to a volume percentage of at maximum about 60 vol.%, especially at maximum about 30 vol.%, such as at maximum 20 vol.% of the additives relative to the total volume of the thermoplastic material and additives.

The at least one additive may be selected from a group consisting of antioxidants, heat stabilizers, light stabilizers, ultraviolet light stabilizers, ultraviolet light absorbing additives, near infrared light absorbing additives, infrared light absorbing additives, plasticizers, lubricants, release agents, antistatic agents, anti-fog agents, antimicrobial agents, colorants, laser marking additives, surface effect additives, radiation stabilizers, flame retardants, and anti-drip agents. The additive may have useful properties selected from optical properties, electrical properties, thermal properties, and mechanical properties.

In general, the first and second thermoplastic materials have a glass transition temperature T_g and/or a melting temperature T_m. The glass transition temperature T_g and/or the melting temperature T_m of the first thermoplastic material may be same as or different from the glass transition temperature T_g and/or the melting temperature T_m of the second thermoplastic material. The 3D printable material will be heated by the 3D printer before it leaves the nozzle to a temperature of at least the glass transition temperature, and in general at least the melting temperature. Hence, the printer head action may comprise heating the 3D printable material above the glass transition, or above the melting temperature. It should be noted that melting occurs when the polymer chains fall out of their crystal structures and become a disordered liquid, while glass transition is a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being higher than the former. The glass transition temperature and the melting point may be determined with differential scanning calorimetry.

The method of the invention may be performed by a 3D printer, for example by means of a computer program product comprising instructions which, when the computer program product is executed by the 3D printer, cause the 3D printer to carry out the method.

The present invention further relates to a 3D printer for producing a 3D item by means of fused deposition modelling, the 3D printer comprising a first supplying element for providing a plurality of elongated pellets comprising a first 3D printable material, wherein each elongated pellet of the plurality of elongated pellets has a length L_P along a longitudinal axis and a width W_P in a direction being substantially perpendicular to the longitudinal axis. The first supplying element may be a conveyor belt, a funnel, a feeder, or the like.

The 3D printer of the present invention further comprises a feeding container for receiving the plurality of elongated pellets and an aligning element arranged for aligning the plurality of elongated pellets such that the longitudinal axes of elongated pellets of the plurality of elongated pellets are substantially parallel to each other, thus forming an aligned plurality of elongated pellets.

The aligning element is an aligning duct or the like and may be an integral portion of the feeding container. The feeding container is a feeding funnel having a first end portion arranged for receiving the elongated pellets, and a second end portion arranged for releasing elongated pellets, wherein the cross-section of the first end portion is greater than the cross-section of the second end portion. The second end portion of the feeding funnel is connected to the aligning element. Once the elongated pellets reach the second end portion of the feeding funnel, they are fed to the aligning element, wherein they are aligned. The aligning element may be a separate element being arranged in mechanical connection with the feeding container.

The 3D printer further comprises a feeding duct for receiving the aligned plurality of elongated pellets, and a printer head comprising a nozzle. The nozzle can be set to a nozzle temperature T_n, and it is arranged for layer-wise depositing the first 3D printable material thus obtaining the 3D item comprising at least one layer of first 3D printed material.

The 3D printer may further comprise a second supplying element for providing a second 3D printable material. The second 3D printable material may comprise a second thermoplastic polymer being different from the first thermoplastic polymer. Preferably, the second 3D printable material is in the form of a filament. The first and the second supplying element may be arranged substantially parallel to each other.

In a particular embodiment, the first and the second 3D printable materials may be fed alternatingly to the nozzle of the 3D printer, such that a 3D item having a particular pattern and/or other properties is obtained. For instance, the first 3D printable material may comprise a plurality of elongated pellets, wherein the plurality of the elongated pellets has a first group of elongated pellets having a first colour, and a second group of elongated pellets having a second colour. In the aligned plurality of elongated pellets, the elongated pellets of the first group and the elongated pellets of the second group may be arranged alternatingly. Further, the second 3D printable material may be in the form of a filament having a third colour. By feeding the first and the second 3D printable material in a particular way, a desired pattern may be created on the 3D item.

The 3D printer according to the present invention may further comprise a cutting element arranged upstream from the first supplying element and configured to provide the plurality of elongated pellets. In other words, the first 3D printable material may be provided as a filament and cut into the elongated pellets by the cutting element. Alternatively, the first 3D printable material may be provided as a bulk, for example in the form of beads or the like. In such an embodiment, an extruder may be used in order to extrude the first 3D printable material, which is subsequently fed into the cutting element of the 3D printer. Such an embodiment offers the advantage of a quick and cost-efficient manufacturing.

The 3D printer according to the present invention may further comprise a pushing element and/or a transporting element arranged along the feeding duct. The pushing element and/or the transporting element may facilitate feeding of the aligned elongated pellets through the feeding duct. The pushing element may be a plunger, and the transporting element may be a wheel conveyor.

A 3D item manufactured by the method according to the present invention may readily be provided with desired properties, such as a colour pattern, transparent portions, thermal and/or electrical conductivity or the like. The 3D item comprises a plurality of layers on top of each other. In other words, the 3D item comprises a layer stack, wherein each layer of the layer stack has a width W_L and a height H_L. The height of a layer is the dimension of the layer as measured in the stacking direction, and the width of a layer is the dimension that is oriented perpendicular to the height of the layer. The width W_L and height H_L of individually 3D printed layers may be selected from the range of 100 to 5000 µm, such as 200 to 2500 µm, with the height in general being smaller than the width. For instance, the ratio of height and width may be equal to or smaller than 0.8, such as equal to or smaller than 0.6. It should be noted that the layer width W_L and/or layer height H_L of each layer may be same as or different from the layer width W_L and/or layer height H_L of the other layers. The 3D printed item may comprise at least 5 layers, such as at least 8 layers, or at least 10 layers.

A 3D item manufactured by the method according to the present invention may be comprised in a lighting device, wherein the 3D item is configured as one or more of at least a part of a lighting device housing, at least a part of a wall of a lighting chamber, an optical element; an electrical component, a heatsink.

The method according to the present invention thus allows for manufacturing a 3D item using pelleted 3D printable material, thus offering the advantage of simplicity and cost-efficiency. Further, the method is highly versatile, giving an improved design freedom, wherein the user may select appropriate 3D printable materials and adjust the feeding of the material depending on the required design of the 3D item.

The first thermoplastic polymer may be a single material or may be a combination of two or more materials. Analogously, the second thermoplastic polymer may be a single material or may be a combination of two or more materials.

The printable material is printed on a receiver item. Especially, the receiver item can be the building platform or can be comprised by the building platform. The receiver item can also be heated during 3D printing. However, the receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform. Instead of the term "receiver item" also the term "substrate" may be used. Therefore, the phrase "printing on a substrate" and similar phrases include amongst others directly printing on the substrate, or printing on a coating on the substrate or printing on 3D printed material earlier printed on the substrate.

Layer by layer printable material is deposited, by which the 3D printed item is generated during the printing stage. The 3D printed item may show a characteristic ribbed structure originating from the deposited filaments. However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing action may be executed after removing the printed item from the receiver item. Post processing may include one or more of polishing, coating, adding a functional component, and cross-linking. Post-processing may include smoothening the ribbed structures, which may lead to an essentially smooth surface. Post-processing may include cross-linking of the thermoplastic material. This may result in fewer or no thermoplastic properties of the material.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Fig. 1 schematically depicts a feeding container of the 3D printer according to the present invention.
Fig. 2 illustrates a feeding duct of the 3D printer according to the present invention.
Fig. 3 depicts another embodiment of a feeding duct of the 3D printer according to the present invention.
Fig. 4 shows one embodiment of a 3D printer according to the present invention.
Fig. 5 depicts another embodiment of a 3D printer according to the present invention.

All the figures are schematic, not necessarily to scale, and generally only show parts which are necessary in order to elucidate embodiments of the present invention, wherein other parts may be omitted or merely suggested.

### DETAILED DESCRIPTION OF THE EMBODIMENTS

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments of the present invention are provided by way of example so that this disclosure will convey the scope of the invention to those skilled in the art. In the drawings, identical reference numerals denote the same or similar components having a same or similar function, unless specifically stated otherwise.

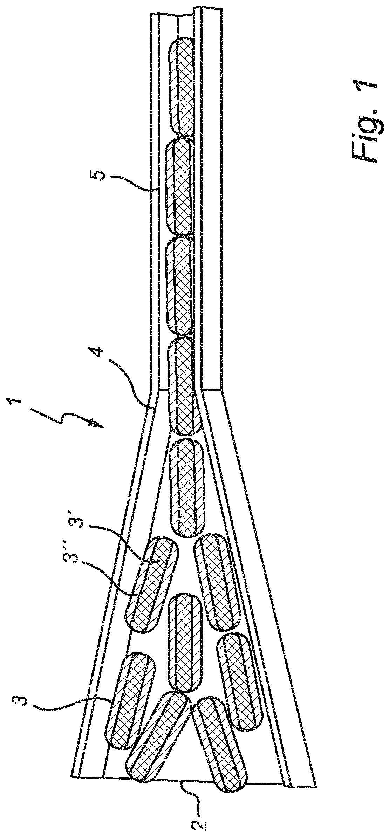

Fig. 1 shows a feeding container 1 in the form of a feeding funnel having a first end portion 2 arranged for receiving the elongated pellets 3, and a second end portion 4 arranged for releasing elongated pellets 3, wherein the cross-section of the first end portion 2 is greater than the cross-section of the second end portion 4. The aligning element 5 depicted in Fig. 1 is a duct being an integral portion of the feeding container 1. Once the elongated pellets 3 reach the second end portion 4 of the feeding container 1, they are fed to the aligning element 5, wherein they are aligned.

As may be seen in Fig. 1, each elongated pellet 3 of the plurality of elongated pellets comprises a 3D printable core material 3' and a 3D printable shell material 3". Because of the elongated shape of the pellet 3, the orientation of the pellet intake can be controlled thus aligning orientation of the core 3' in the 3D item.

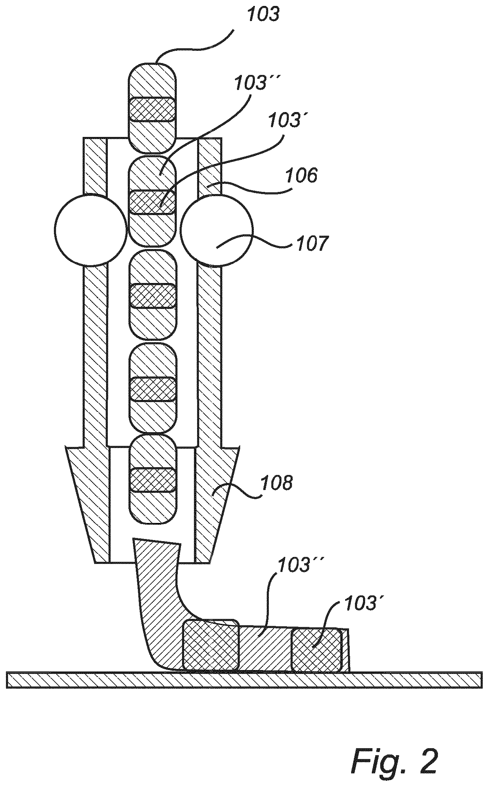

Fig. 2 illustrates a feeding duct 106 comprising a transporting element 107 in the form of a wheel conveyor for feeding aligned elongated pellets 103 towards the nozzle 108. Each elongated pellet 103 of the plurality of elongated pellets comprises a first portion 103' and two second portions 103'' along the length of the elongated pellet 103. The first portion 103' may have a property being different from the property of the second portion 103''. The property may be selected from a group consisting of an optical property, a physical property, a mechanical property, and combinations thereof. The optical property may be colour, reflectivity, absorption and/or light transmission. The physical property may be thermal conductivity. The mechanical property may be the thermoplastic polymer.

The plurality of first portions 103' and/or the plurality of second portions 103'' are arranged symmetrically along the length of the elongated pellet 103, and along the feeding duct 106. When the first 3D printable material leaves the nozzle, a pattern is provided.

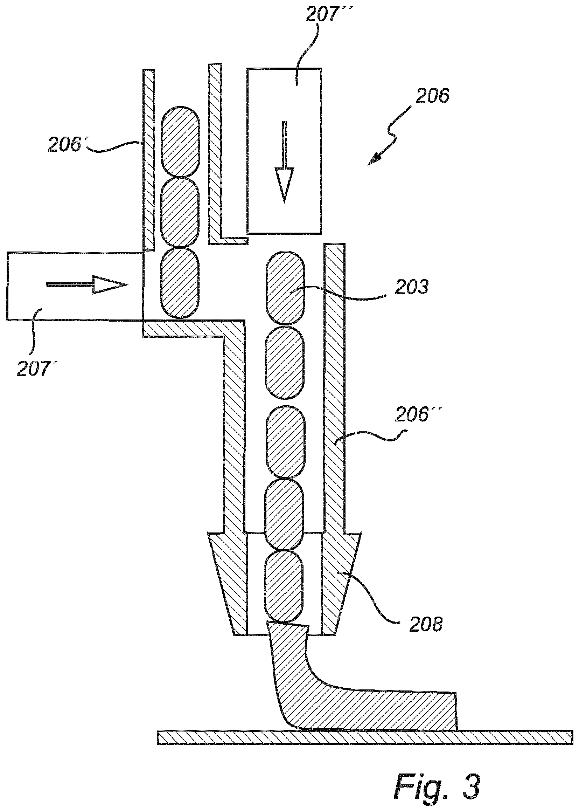

Fig. 3 illustrates a feeding duct 206. The feeding duct comprises a first section 206' and a first pushing element 207', and a second section 206" and a second pushing element 207''. The first pushing element 207' moves the aligned elongated pellets 203 to the second section 206'', while the second pushing means 207" feeds the aligned elongated pellets 203 towards the nozzle 208.

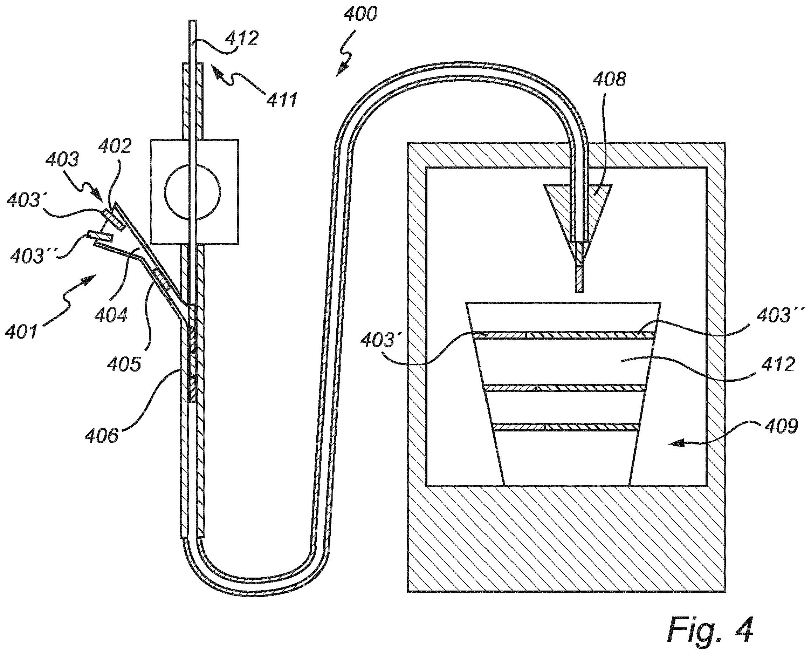

Fig. 4 illustrates a portion of a 3D printer 400 according to the present invention. The 3D printer 400 comprises a first supplying element 410 (not shown) for providing a plurality of elongated pellets 403. The 3D printer 400 further comprises a feeding container 401 for receiving the plurality of elongated pellets 403, and an aligning element 405 arranged for aligning the plurality of elongated pellets 403, such that the longitudinal axes of elongated pellets of the plurality of elongated pellets are substantially parallel to each other, thus forming an aligned plurality of elongated pellets 403.

The feeding container 401 is in the form of a feeding funnel having a first end portion 402 arranged for receiving the elongated pellets 403, and a second end portion 404 arranged for releasing elongated pellets 404, wherein the cross-section of the first end portion 402 is greater than the cross-section of the second end portion 404. The second end portion 404 of the feeding funnel is connected to the aligning element 405, the latter being in the form of an aligning duct. Once the elongated pellets reach the second end portion 404 of the feeding container 401, they are fed to the aligning element 405, wherein they are aligned.

The 3D printer 400 further comprises a feeding duct 406 for receiving the aligned plurality of elongated pellets 403, and a printer head comprising a nozzle 408 that can be set to a nozzle temperature T_n, the nozzle 408 being arranged for layer-wise depositing the first 3D printable material thus obtaining the 3D item 409 comprising a plurality of layers of first 3D printed material.

The 3D printer 400 further comprises a second supplying element 411 (not shown) for providing a second 3D printable material 412 in the form of a filament.

As depicted in Fig. 4, the first and the second 3D printable materials 403, 412 are fed alternatingly to the nozzle 408 of the 3D printer 400, such that a 3D item 409 having a particular pattern is obtained. The first 3D printable material comprises a plurality of elongated pellets 403, wherein the plurality of the elongated pellets has a first group of elongated pellets 403' having a first colour, and a second group of elongated pellets 403" having a second colour. In the aligned plurality of elongated pellets, the elongated pellets of the first group 403' and the elongated pellets of the second group 403'' are arranged alternatingly. Further, the second 3D printable material 412 is in the form of a filament having a third colour. By feeding the first and the second 3D printable material 403, 412 in a particular way, a desired pattern may be created on the 3D item 409.

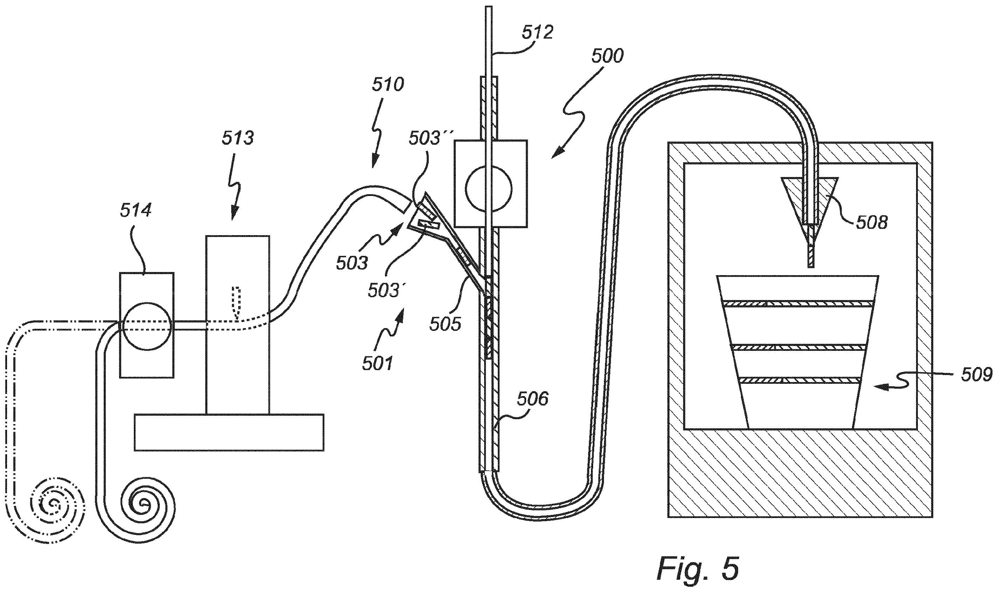

Fig. 5 illustrates another embodiment of a 3D printer 500 according to the present invention. The 3D printer 500 comprises a first supplying element 510 for providing the first 3D printable material. The 3D printer 500 further comprises a cutting element 513 arranged upstream from the first supplying element 510 and configured to provide the plurality of elongated pellets 503. The first 3D printable material is provided as a bulk, and an extruder 514 is used in order to extrude the first 3D printable material, which is subsequently fed into the cutting element 513 of the 3D printer 500. Such an embodiment offers the advantage of a quick and cost-efficient manufacturing. The other aspects of the 3D printer 500 are analogous to the embodiment depicted in Fig. 4.

Although the present invention has been described with reference to various embodiments, those skilled in the art will recognize that changes may be made without departing from the scope of the invention. It is intended that the detailed description be regarded as illustrative and that the appended claims including all the equivalents are intended to define the scope of the invention. While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A method for producing a 3D item (509) by means of fused deposition modelling using a 3D printer (500), the method comprising the steps of:
a) providing a plurality of elongated pellets (503), each elongated pellet of the plurality of elongated pellets (503) comprising a first 3D printable material comprising a first thermoplastic polymer, wherein each elongated pellet of the plurality of elongated pellets (503) has a length L_P along a longitudinal axis and a width W_P in a direction being substantially perpendicular to the longitudinal axis,
b) feeding the plurality of elongated pellets (503) into a feeding container (501),
c) aligning the plurality of elongated pellets (500) in an aligning element (505), such that the longitudinal axes of elongated pellets of the plurality of elongated pellets (503) are substantially parallel to each other, thus forming an aligned plurality of elongated pellets,
d) feeding the aligned plurality of elongated pellets (503) through a feeding duct (506) into a printer head of the 3D printer (500), and
e) layer-wise depositing the first 3D printable material thus obtaining the 3D item (509) comprising at least one layer of first 3D printed material.

2. The method according to claim 1, wherein step c) is performed by providing a mechanical force to the feeding container (501).

3. The method according to claim 1 or 2, wherein step d) is performed by means of a pushing element and/or a transporting element.

4. The method according to any one of the preceding claims, wherein the aspect ratio of each elongated pellet of the plurality of elongated pellets (503) has a value in a range of 2 to 10.

5. The method according to any one of the preceding claims, wherein each elongated pellet of the plurality of elongated pellets (103) comprises at least a first portion (103') and at least a second portion (103") along the length of the elongated pellet (103), wherein the first portion (103') has a property being different from the property of the second portion (103").

6. The method according to claim 5, wherein each elongated pellet of the plurality of elongated pellets (103) comprises a plurality of first portions (103') and/or a plurality of second portions (103''), wherein the plurality of first portions (103') and/or the plurality of second portions (103'') is arranged symmetrically along the length of the elongated pellet (103).

7. The method according to claim 5 or 6, wherein the property is selected from a group consisting of an optical property, a physical property, a mechanical property, and combinations thereof.

8. The method according to any one of the preceding claims, wherein each elongated pellet of the plurality of elongated pellets (3) comprises a 3D printable core material (3') and a 3D printable shell material (3"), wherein the first 3D printed material comprises a core comprising a 3D printed core material and a shell comprising 3D printed shell material, wherein the shell at least partly encloses the core, and wherein the 3D printable core (3') and/or the 3D printable shell (3") material comprises electrically and/or thermally conductive material.

9. The method according to any one of the preceding claims, the method further comprising the steps of:
f) feeding a second 3D printable material (512) into the printer head of the 3D printer (500), and
g) layer-wise depositing the second 3D printable material thus obtaining the 3D item (509) comprising at least one layer comprising the second 3D printed material.

10. The method according to claim 9, wherein step f) occurs immediately before and/or immediately after step d).

11. A 3D printer (500) for producing a 3D item (509) by means of fused deposition modelling, the 3D printer (500) comprising:
- a first supplying element (510) for providing a plurality of elongated pellets (503) comprising a first 3D printable material, wherein each elongated pellet of the plurality of elongated pellets (503) has a length L_P along a longitudinal axis and a width W_P in a direction being substantially perpendicular to the longitudinal axis,
- a feeding container (501) for receiving the plurality of elongated pellets (503), the feeding container (501) being a feeding funnel having a first end portion arranged for receiving elongated pellets, and a second end portion arranged for releasing elongated pellets, wherein the cross-section of the first end portion is greater than the cross-section of the second end portion,
- an aligning element (505) for aligning the plurality of elongated pellets (503) such that the longitudinal axes of elongated pellets of the plurality of elongated pellets (503) are substantially parallel to each other, thus forming an aligned plurality of elongated pellets, the aligning element (505) being an aligning duct connected to the second end portion of the feeding funnel,
- a feeding duct (506) for receiving the aligned plurality of elongated pellets, and
- a printer head comprising a nozzle (508) that is arranged for layer-wise depositing the first 3D printable material thus obtaining the 3D item (509) comprising at least one layer of first 3D printed material.

12. The 3D printer (500) according to claim 11, further comprising a second supplying element (511) for providing a second 3D printable material.

13. The 3D printer (500) according to claim 11 or 12, further comprising a cutting element (513) arranged upstream from the first supplying element (510) and configured to provide the plurality of elongated pellets (503).

## Patentansprüche

1. Verfahren zum Herstellen eines 3D-Artikels (509) mittels Schmelzschichtung unter Verwendung eines 3D-Druckers (500), das Verfahren umfassend die Schritte:
a) Bereitstellen einer Vielzahl von länglichen Pellets (503), jedes längliche Pellet der Vielzahl von länglichen Pellets (503) umfassend ein erstes 3D-druckbares Material, umfassend ein erstes thermoplastisches Polymer, wobei jedes längliche Pellet der Vielzahl von länglichen Pellets (503) eine Länge L_P entlang einer Längsachse und eine Breite W_P in einer Richtung, die im Wesentlichen senkrecht zu der Längsachse ist, aufweist,
b) Zuführen der Vielzahl von länglichen Pellets (503) in einen Zuführbehälter (501),
c) derartiges Ausrichten der Vielzahl von länglichen Pellets (500) in einem Ausrichtelement (505), dass die Längsachsen der länglichen Pellets der Vielzahl von länglichen Pellets (503) im Wesentlichen parallel zueinander sind, wobei somit eine ausgerichtete Vielzahl von länglichen Pellets ausgebildet wird,
d) Zuführen der ausgerichteten Vielzahl von länglichen Pellets (503) über einen Zuführkanal (506) in einen Druckkopf des 3D-Druckers (500) und
e) schichtweises Auftragen des ersten 3D-druckbaren Materials, wobei somit der 3D-Artikel (509), umfassend mindestens eine Schicht aus erstem 3D-gedruckten Material, erhalten wird.

2. Verfahren nach Anspruch 1, wobei Schritt c) durch Bereitstellen einer mechanischen Kraft an den Zuführbehälter (501) durchgeführt wird.

3. Verfahren nach Anspruch 1 oder 2, wobei Schritt d) mittels eines Schubelements und/oder eines Transportelements durchgeführt wird.

4. Verfahren nach einem der vorstehenden Ansprüche, wobei der Formfaktor jedes länglichen Pellets der Vielzahl von länglichen Pellets (503) einen Wert in einem Bereich von 2 bis 10 aufweist.

5. Verfahren nach einem der vorstehenden Ansprüche, wobei jedes längliche Pellet der Vielzahl von länglichen Pellets (103) entlang der Länge des länglichen Pellets (103) mindestens einen ersten Abschnitt (103') und mindestens einen zweiten Abschnitt (103") umfasst, wobei der erste Abschnitt (103') eine Eigenschaft, die sich von der Eigenschaft des zweiten Abschnitts (103") unterscheidet, aufweist.

6. Verfahren nach Anspruch 5, wobei jedes längliche Pellet der Vielzahl von länglichen Pellets (103) eine Vielzahl von ersten Abschnitten (103') und/oder eine Vielzahl von zweiten Abschnitten (103") umfasst, wobei die Vielzahl von ersten Abschnitten (103') und/oder die Vielzahl von zweiten Abschnitten (103") symmetrisch entlang der Länge des länglichen Pellets (103) angeordnet ist.

7. Verfahren nach Anspruch 5 oder 6, wobei die Eigenschaft aus einer Gruppe ausgewählt ist, bestehend aus einer optischen Eigenschaft, einer physikalischen Eigenschaft, einer mechanischen Eigenschaft und Kombinationen davon.

8. Verfahren nach einem der vorstehenden Ansprüche, wobei jedes längliche Pellet der Vielzahl von länglichen Pellets (3) ein 3D-druckbares Kernmaterial (3') und ein 3D-druckbares Hüllenmaterial (3") umfasst, wobei das erste 3D-gedruckte Material einen Kern, umfassend ein 3D-gedrucktes Kernmaterial, und eine Hülle, umfassend ein 3D-gedrucktes Hüllenmaterial, umfasst, wobei die Hülle den Kern mindestens teilweise umschließt und wobei das 3D-druckbare Kern- (3') und/oder das 3D-druckbare Hüllenmaterial (3") elektrisch und/oder thermisch leitfähiges Material umfasst.

9. Verfahren nach einem der vorstehenden Ansprüche, das Verfahren ferner umfassend die Schritte:
f) Zuführen eines zweiten 3D-druckbaren Materials (512) in den Druckkopf des 3D-Druckers (500) und
g) schichtweises Auftragen des zweiten 3D-druckbaren Materials, wobei somit der 3D-Artikel (509), umfassend mindestens eine Schicht, umfassend das zweite 3D-gedruckte Material, erhalten wird.

10. Verfahren nach Anspruch 9, wobei Schritt f) unmittelbar vor und/oder unmittelbar nach Schritt d) erfolgt.

11. 3D-Drucker (500) zum Herstellen eines 3D-Artikels (509) mittels Schmelzschichtung, der 3D-Drucker (500) umfassend:
- ein erstes Versorgungselement (510) zum Bereitstellen einer Vielzahl von länglichen Pellets (503), umfassend ein erstes 3D-druckbares Material, wobei jedes längliche Pellet der Vielzahl von länglichen Pellets (503) eine Länge L_P entlang einer Längsachse und eine Breite W_P in einer Richtung, die im Wesentlichen senkrecht zu der Längsachse ist, aufweist,
- einen Zuführbehälter (501) zum Aufnehmen der Vielzahl von länglichen Pellets (503), wobei der Zuführbehälter (501) ein Zuführtrichter, der einen ersten Endabschnitt zum Aufnehmen der länglichen Pellets und einen zweiten Endabschnitt zum Abgeben der länglichen Pellets aufweist, ist, wobei der Querschnitt des ersten Endabschnitts größer als der Querschnitt des zweiten Endabschnitts ist,
- ein Ausrichtelement (505) zum derartigen Ausrichten der Vielzahl von länglichen Pellets (503), dass die Längsachsen der länglichen Pellets der Vielzahl von länglichen Pellets (503) im Wesentlichen parallel zueinander sind, wobei somit eine ausgerichtete Vielzahl von länglichen Pellets ausgebildet wird, wobei das Ausrichtelement (505) ein Ausrichtkanal ist, der mit dem zweiten Endabschnitt des Zuführtrichters verbunden ist,
- einen Zuführkanal (506) zum Aufnehmen der ausgerichteten Vielzahl von länglichen Pellets und
- einen Druckkopf, umfassend eine Düse (508), die zum schichtweisen Auftragen des ersten 3D-druckbaren Materials angeordnet ist, wobei somit der 3D-Artikel (509), umfassend mindestens eine Schicht aus erstem 3D-gedruckten Material, erhalten wird.

12. 3D-Drucker (500) nach Anspruch 11, ferner umfassend ein zweites Versorgungselement (511) zum Bereitstellen eines zweiten 3D-druckbaren Materials.

13. 3D-Drucker (500) nach Anspruch 11 oder 12, ferner umfassend ein Schneidelement (513), das vorgeschaltet des ersten Versorgungselements (510) angeordnet und konfiguriert ist, um die Vielzahl von länglichen Pellets (503) bereitzustellen.

## Revendications

1. Procédé de production d'un article 3D (509) au moyen d'un dépôt de fil fondu à l'aide d'une imprimante 3D (500), le procédé comprenant les étapes consistant à :
a) fournir une pluralité de pastilles allongées (503), chaque pastille allongée de la pluralité de pastilles allongées (503) comprenant un premier matériau imprimable en 3D comprenant un premier polymère thermoplastique, dans lequel chaque pastille allongée de la pluralité de pastilles allongées (503) a une longueur L_P le long d'un axe longitudinal et une largeur W_P dans une direction qui est sensiblement perpendiculaire à l'axe longitudinal,
b) introduire la pluralité de pastilles allongées (503) dans un récipient d'alimentation (501),
c) aligner la pluralité de pastilles allongées (500) dans un élément d'alignement (505), de sorte que les axes longitudinaux de pastilles allongées de la pluralité de pastilles allongées (503) soient sensiblement parallèles les uns aux autres, formant ainsi une pluralité alignée de pastilles allongées,
d) introduire la pluralité alignée de pastilles allongées (503) à travers un conduit d'alimentation (506) dans une tête d'imprimante de l'imprimante 3D (500), et
e) déposer couche par couche le premier matériau imprimable en 3D, obtenant ainsi l'article 3D (509) comprenant au moins une couche de premier matériau imprimé en 3D.

2. Procédé selon la revendication 1, dans lequel l'étape c) est réalisée en fournissant une force mécanique au récipient d'alimentation (501).

3. Procédé selon la revendication 1 ou 2, dans lequel l'étape d) est réalisée au moyen d'un élément de poussée et/ou d'un élément de transport.

4. Procédé selon l'une quelconque des revendications précédentes, dans lequel le rapport d'aspect de chaque pastille allongée de la pluralité de pastilles allongées (503) a une valeur comprise dans une plage allant de 2 à 10.

5. Procédé selon l'une quelconque des revendications précédentes, dans lequel chaque pastille allongée de la pluralité de pastilles allongées (103) comprend au moins une première partie (103') et au moins une seconde partie (103") le long de la longueur de la pastille allongée (103), dans lequel la première partie (103') a une propriété qui est différente de la propriété de la seconde partie (103").

6. Procédé selon la revendication 5, dans lequel chaque pastille allongée de la pluralité de pastilles allongées (103) comprend une pluralité de premières portions (103') et/ou une pluralité de secondes portions (103"), dans lequel la pluralité de premières portions (103') et/ou la pluralité de secondes portions (103") sont disposées symétriquement le long de la longueur de la pastille allongée (103).

7. Procédé selon la revendication 5 ou 6, dans lequel la propriété est choisie dans un groupe constitué d'une propriété optique, d'une propriété physique, d'une propriété mécanique, et de combinaisons de celles-ci.

8. Procédé selon l'une quelconque des revendications précédentes, dans lequel chaque pastille allongée de la pluralité de pastilles allongées (3) comprend un matériau de noyau imprimable en 3D (3') et un matériau d'enveloppe imprimable en 3D (3"), dans lequel le premier matériau imprimé en 3D comprend un noyau comprenant un matériau de noyau imprimé en 3D et une enveloppe comprenant un matériau d'enveloppe imprimé en 3D, dans lequel l'enveloppe entoure au moins partiellement le noyau, et dans lequel le matériau de noyau imprimable en 3D (3') et/ou d'enveloppe imprimable en 3D (3") comprend un matériau conducteur électriquement et/ou thermiquement.

9. Procédé selon l'une quelconque des revendications précédentes, le procédé comprenant en outre les étapes consistant à :
f) introduire un second matériau imprimable en 3D (512) dans la tête d'imprimante de l'imprimante 3D (500), et
g) déposer couche par couche le second matériau imprimable en 3D, obtenant ainsi l'article 3D (509) comprenant au moins une couche comprenant le second matériau imprimé en 3D.

10. Procédé selon la revendication 9, dans lequel l'étape f) se produit immédiatement avant et/ou immédiatement après l'étape d).

11. Imprimante 3D (500) pour la production d'un article 3D (509) au moyen d'un dépôt de fil fondu, l'imprimante 3D (500) comprenant :
- un premier élément de fourniture (510) destiné à fournir une pluralité de pastilles allongées (503) comprenant un premier matériau imprimable en 3D, dans laquelle chaque pastille allongée de la pluralité de pastilles allongées (503) a une longueur L_P le long d'un axe longitudinal et une largeur W_P dans une direction qui est sensiblement perpendiculaire à l'axe longitudinal,
- un récipient d'alimentation (501) destiné à recevoir la pluralité de pastilles allongées (503), le récipient d'alimentation (501) étant un entonnoir d'alimentation ayant une première partie d'extrémité conçue pour recevoir des pastilles allongées, et une seconde partie d'extrémité conçue pour libérer des pastilles allongées, dans laquelle la section transversale de la première partie d'extrémité est plus grande que la section transversale de la seconde partie d'extrémité,
- un élément d'alignement (505) destiné à aligner la pluralité de pastilles allongées (503) de sorte que les axes longitudinaux de pastilles allongées de la pluralité de pastilles allongées (503) soient sensiblement parallèles les uns aux autres, formant ainsi une pluralité alignée de pastilles allongées, l'élément d'alignement (505) étant un conduit d'alignement relié à la seconde partie d'extrémité de l'entonnoir d'alimentation,
- un conduit d'alimentation (506) destiné à recevoir la pluralité alignée de pastilles allongées, et
- une tête d'imprimante comprenant une buse (508) conçue pour déposer couche par couche le premier matériau imprimable en 3D, obtenant ainsi l'article 3D (509) comprenant au moins une couche de premier matériau imprimé en 3D.

12. Imprimante 3D (500) selon la revendication 11, comprenant en outre un second élément de fourniture (511) destiné à fournir un second matériau imprimable en 3D.

13. Imprimante 3D (500) selon la revendication 11 ou 12, comprenant en outre un élément de coupe (513) disposé en amont du premier élément de fourniture (510) et configuré pour fournir la pluralité de pastilles allongées (503).
